# EUROPÄISCHE PATENTSCHRIFT

(11) **EP 4 159 574 B1**
(45) Veröffentlichungstag und Bekanntmachung des Hinweises auf die Patenterteilung: **13.08.2025**
(21) Anmeldenummer: 22197880.2
(22) Anmeldetag: 26.09.2022
(51) Int. Cl.: B61C 9/50

(54) **FAHRWERK FÜR EIN SCHIENENFAHRZEUG UND SCHIENENFAHRZEUG**
RUNNING GEAR FOR A RAIL VEHICLE AND RAIL VEHICLE
BOGIE POUR VÉHICULE FERROVIAIRE ET VÉHICULE FERROVIAIRE

(30) Priorität: 30.09.2021 AT 507822021
(43) Veröffentlichungstag der Anmeldung: 05.04.2023
(73) Patentinhaber: Siemens Mobility Austria GmbH, 1210 Wien (AT)
(72) Erfinder: Teichmann, Martin, 8045 Graz (AT)
(74) Vertreter: Siemens Patent Attorneys

(56) Entgegenhaltungen:
- EP-A1- 0 799 737
- EP-A1- 2 692 607
- DE-A1- 19 615 343
- DE-C1- 19 600 420
- DE-C1- 4 445 407
- US-B2- 10 988 147

## Beschreibung

Die Erfindung betrifft ein Fahrwerk für ein Schienenfahrzeug mit einer Tragestruktur, mit welcher zumindest ein erstes Rad zur Abstützung des Fahrwerks auf einer ersten Schiene und ein zweites Rad zur Abstützung des Fahrwerks auf einer zweiten Schiene drehbar verbunden sind, sowie mit zumindest einem Motor und zumindest einem Getriebe, welche mit der Tragestruktur verbunden sind und zur Drehmomentübertragung zumindest mit dem ersten Rad gekoppelt sind.

Fahrwerke für Schienenfahrzeuge weisen aufgrund beengter Platzverhältnisse häufig einen begrenzten Bauraum für Fahrwerkskomponenten auf. Beispielsweise ist bei Niederflurfahrzeugen ein Fahrzeugboden zwischen Rädern des Fahrwerks abgesenkt, wodurch es erforderlich sein kann, Fahrwerkskomponenten wie Motoren, Getriebe, Kupplungen, Bremsen usw. in Außenbereichen des Fahrwerks anzuordnen. Diese Fahrwerkskomponenten dürfen allerdings seitlich nicht übermäßig weit, von einem Fahrwerk bzw. von einem Schienenfahrzeug aus betrachtet, nach außen ragen.

Aus dem Stand der Technik ist beispielsweise die EP 0 413 337 A1 bekannt, in welcher ein elektrischer Direktantrieb eines Schienenfahrzeugs offenbart ist. Ein Elektromotor ist zur Übertragung von Drehmomenten auf ein Rad eines Fahrwerks des Schienenfahrzeugs in Richtung einer Radlängsachse des Rads neben dem Rad, an einer Außenseite des Schienenfahrzeugs angeordnet. Das Rad ist drehbar mit einem Fahrgestell verbunden. Das Fahrgestell umgreift von einer Innenseite des Schienenfahrzeugs her das Rad und ist an der Außenseite mit dem Elektromotor verbunden. Aufgrund des Direktantriebs, welcher kein Getriebe erfordert, ist zwischen dem Elektromotor und dem Rad kein Getriebe angeordnet.

Der genannte Ansatz weist in seiner bekannten Form den Nachteil auf, dass das Fahrgestell aufgrund dessen Verbindung mit dem Elektromotor das Rad umgreifend ausgeführt ist und somit einen erheblichen Bauraum im Bereich des Rads benötigt. Weiterhin zeigt die EP 0 567 445 A1 ein Fahrwerk eines Niederflur-Schienenfahrzeugs, bei welchem ein Rad über eine elastische Kupplung und ein Getriebe mit einem Motor gekoppelt ist. Das Getriebe ist über die Kupplung, welche an das Rad angeschlossen ist, mit dem Rad verbunden. Das Getriebe ist über einen Flansch mit dem Motor gekoppelt, wobei der Motor oberhalb des Getriebes angeordnet ist.

Der genannte Ansatz weist in seiner bekannten Form den Nachteil auf, dass zwischen dem Rad und dem Motor ein nicht unbeträchtlicher Bauraum für das Getriebe vorgesehen ist.

Weiterhin offenbaren die Dokumente EP 0 799 737 A1, DE 196 15 343 A1, DE 196 00 420 C1 und US 10 988 147 B2 auch Fahrwerke mit einem Motor und einem Getriebe.

Der Erfindung liegt daher die Aufgabe zugrunde, ein gegenüber dem Stand der Technik weiterentwickeltes Fahrwerk anzugeben, dessen Motor, Getriebe und erstes Rad eine möglichst kompakte Anordnung bilden.

Erfindungsgemäß wird diese Aufgabe gelöst mit einem Fahrwerk nach Anspruch 1.

Dadurch wird eine Verschränkung des ersten Rads mit dem Getriebe und somit eine Vergrößerung eines Bauraumbudgets für den Motor bewirkt. Der Motor bzw. dessen Motorgehäuse kann, z.B. unter Berücksichtigung einer Bauraumbegrenzung an Fahrwerksflanken, beispielsweise größer ausgeführt sein als bei einer Variante, bei der ein Rad z.B. über einen Wellenstummel in Richtung einer Radlängsachse mit einem von dem Rad beabstandeten Getriebe gekoppelt ist.

Weiterhin wird der von der ringförmigen Radkomponente (z.B. von einem Radkranz oder von einem mit dem Radkranz elastisch verbundenen Radringkörper etc.) begrenzte Hohlraum von dem Getriebe genutzt.

Das zweite Zahnrad ist zumindest teilweise von der ringförmigen Radkomponente umgeben.

Weiterhin kann auf das erste Rad umgreifende Vorrichtungen zur Lagerung des Motors auf der Tragestruktur verzichtet werden.

Weitere vorteilhafte Ausgestaltungen des erfindungsgemäßen Fahrwerks ergeben sich aus den Unteransprüchen.

Eine Übertragung hoher Drehmomente zwischen dem Motor und dem ersten Rad wird ermöglicht, wenn ein drittes Zahnrad des zumindest einen Getriebes dem ersten Zahnrad und dem zweiten Zahnrad zwischengeordnet ist.

Durch diese Maßnahme wird eine Anordnung ähnlich einem Planetengetriebe erreicht.

Im Zusammenhang mit dem dritten Zahnrad wird eine besonders günstige Lösung erreicht, wenn das dritte Zahnrad drehbar und relativ zu der Tragestruktur im Wesentlichen unverschieblich auf der Tragestruktur oder auf einem fest mit der Tragestruktur verbundenen Zahnradträger gelagert ist.

Durch diese Maßnahme erfüllt die Tragestruktur eine Getriebelagerungsfunktion. Die Anordnung ähnelt einem Planetengetriebe mit Standübersetzung.

Sofern das dritte Zahnrad auf der Tragestruktur oder auf dem mit der Tragestruktur verbundenen Zahnradträger gelagert ist, kann die Tragestruktur oder der Zahnradträger beispielsweise über jenen Bereich, in dem das dritte Zahnrad gelagert ist, hinaus verlängert und mit dem Motor verbunden werden, wodurch die Tragestruktur neben ihrer Getriebelagerungsfunktion auch eine Motorlagerungsfunktion erfüllen kann.

Eine mechanische Entkopplung des Motors von der Tragestruktur erhält man, wenn der zumindest eine Motor federnd mit der Tragestruktur verbunden ist, wobei zwischen dem zumindest einen Motor und dem zumindest einen Getriebe eine Kupplung angerordnet ist und zwischen dem zumindest einen Getriebe und der Tragestruktur ein Getriebelager angeordnet ist. Über die Kupplung können Relativbewegungen zwischen dem Motor und dem Getriebe ausgeglichen werden. Aufgrund einer Beweglichkeit des Motors relativ zu dem Getriebe ist das Getriebe über das Getriebelager mit der Tragestruktur verbunden und somit an bzw. auf der Tragestruktur abgestützt.

Insbesondere bei Erfordernis eines abgesenkten Fahrzeugbodens (z.B. bei einem Niederflur-Schienenfahrzeug) ist es hilfreich, wenn die Tragestruktur als Achsportal eines Losradsatzes ausgebildet ist.

Ist das Achsportal beispielsweise zwischen dem ersten Rad und dem zweiten Rad angeordnet bzw. weist das Fahrwerk beispielsweise eine Innenlagerung auf, so kann der Motor beispielsweise außerhalb eines von dem ersten Rad und dem zweiten Rad eingegrenzten Fahrwerksbereichs (d.h. an einer Fahrwerksaußenseite) mit dem ersten Rad gekoppelt sein. Aufgrund der genannten Verschränkung des ersten Rads mit dem Getriebe kann ein an der Fahrwerksaußenseite verfügbares Bauraumbudget in hohem Ausmaß für den Motor selbst genutzt werden, ohne beispielsweise maximal zulässige Fahrwerksbreiten zu überschreiten.

Eine Vorzugslösung erhält man, wenn mit einer Motorwelle des zumindest einen Motors eine Bremsscheibe verbunden ist. Ein aufgrund der Verschränkung des ersten Rads mit dem Getriebe erzielter Bauraumüberschuss wird durch diese Maßnahme für eine Fahrwerksbremse genutzt.

Ein vorteilhafter Anwendungszweck für das erfindungsgemäße Fahrwerk wird mit einem Schienenfahrzeug mit zumindest einem erfindungsgemäßen Fahrwerk erschlossen.

Nachfolgend wird die Erfindung anhand von Ausführungsbeispielen näher erläutert.

Es zeigen beispielhaft:

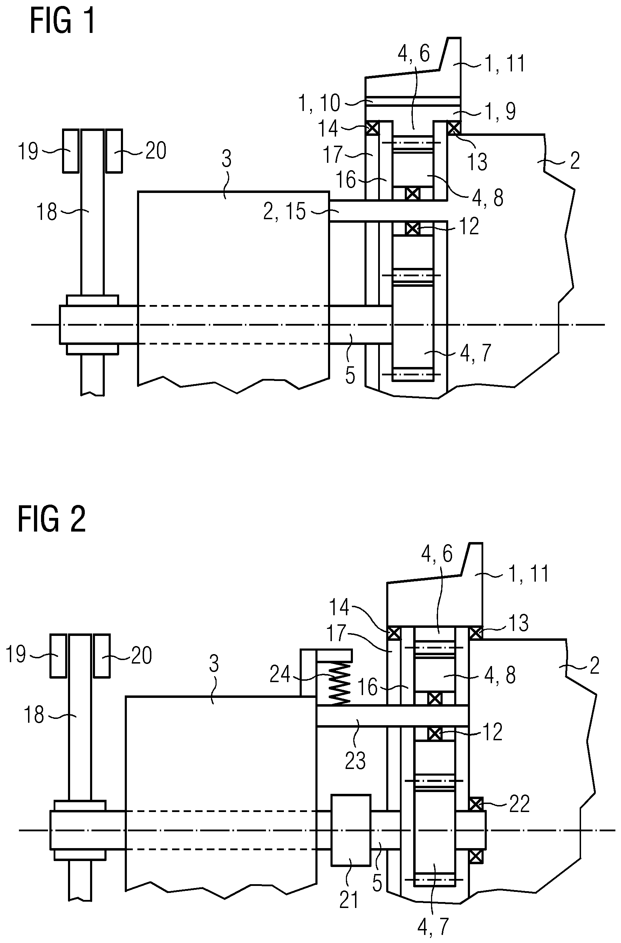

- Fig. 1:: Einen schematischen Seitenriss eines Ausschnitts aus einer beispielhaften ersten Ausführungsvariante eines erfindungsgemäßen Fahrwerks in geschnittener Darstellung, wobei ein Motor über ein mit einem ersten Rad verschränktes Getriebe zur Drehmomentübertragung mit dem ersten Rad gekoppelt ist, und
- Fig. 2:: Einen schematischen Seitenriss eines Ausschnitts aus einer beispielhaften zweiten Ausführungsvariante eines erfindungsgemäßen Fahrwerks in geschnittener Darstellung, wobei ein federnd gelagerter Motor über eine Kupplung und ein mit einem ersten Rad verschränktes Getriebe zur Drehmomentübertragung mit dem ersten Rad gekoppelt ist.

Fig. 1 zeigt einen schematischen Seitenriss eines Ausschnitts aus einer beispielhaften ersten Ausführungsvariante eines erfindungsgemäßen Fahrwerks eines als Niederflurstraßenbahn ausgeführten Schienenfahrzeugs in geschnittener Darstellung. Das Fahrwerk umfasst ein erstes Rad 1 und ein in Fig. 1 nicht sichtbares zweites Rad, welche seitlich an einer als Achsportal ausgebildeten Tragestruktur 2 mit der Tragestruktur 2 zu einem innengelagerten Losradsatz drehbar verbunden sind.

Erfindungsgemäß ist es jedoch auch denkbar, dass die Tragestruktur 2 ein Fahrwerksrahmen ist, mit welchem das erste Rad 1 und das zweite Rad drehbar verbunden sind, wobei das erste Rad 1 und das zweite Rad über eine Radsatzwelle fest miteinander zu einem Radsatz verbunden sein können.

Das erste Rad 1 und das zweite Rad sind konstruktiv sowie verbindungs- und antriebstechnisch gleich ausgeführt.

Über das erste Rad 1 ist das Fahrwerk auf einer ersten Schiene eines in Fig. 1 nicht gezeigten Gleises abgestützt und kann darauf abrollen, über das zweite Rad ist das Fahrwerk auf einer zweiten Schiene des Gleises abgestützt und kann darauf abrollen.

Das Fahrwerk weist weiterhin einen Motor 3 und ein Getriebe 4 auf, welche mit der Tragestruktur 2 verbunden und zur Drehmomentübertragung mit dem ersten Rad 1 gekoppelt sind. Drehmomente aus dem Motor 3 werden über eine Motorwelle 5 und das Getriebe 4 auf das erste Rad 1 übertragen. Das erste Rad 1 und das Getriebe 4 sind miteinander verschränkt ausgeführt. Das Getriebe 4 umfasst ein erstes Zahnrad 6, ein zweites Zahnrad 7 und ein drittes Zahnrad 8.

Das erste Rad 1 ist als das erste Zahnrad 6 ausgebildet. Das erste Zahnrad 6 ist dabei als Hohlrad ausgeführt, welches einstückig mit einer ringförmigen Radkomponente, nämlich einem Radringkörper 9, ausgebildet ist. Der Radringkörper 9 ist über ein Elastikelement 10 mit einem Radkranz 11 des ersten Rads 1 verbunden.

Das zweite Zahnrad 7 ist mit der Motorwelle 5 verbunden und als zentrales Stirnrad des Getriebes 4 ausgebildet. Das zweite Zahnrad 7 ist somit mit dem Motor 3 zur Drehmomentübertragung gekoppelt.

Das dritte Zahnrad 8 ist als dezentrales Stirnrad des Getriebes 4 ausgebildet und dem ersten Zahnrad 6 sowie dem zweiten Zahnrad 7 zwischengeordnet.

Das dritte Zahnrad 8 ist drehbar und relativ zu der Tragestruktur 2 im Wesentlichen unverschieblich über ein erstes Wälzlager 12 auf einem bolzenförmig auskragenden ersten Abschnitt 15 der Tragestruktur 2 gelagert. Geringfügige Verschiebungen zwischen dem dritten Zahnrad 8 und der Tragestruktur 2 (z.B. aufgrund von elastischen Verformungen) können jedoch auftreten.

Das Getriebe 4 weist noch ein viertes Zahnrad und ein fünftes Zahnrad auf, welche in Fig. 1 nicht sichtbar sind und konstruktiv sowie verbindungstechnisch gleich wie das dritte Zahnrad 8 ausgeführt sind. Das dritte Zahnrad 8, das vierte Zahnrad und das fünfte Zahnrad sind in Winkelschritten von 120 ° auf einer gedachten Kreisbahn zwischen dem ersten Zahnrad 6 und dem zweiten Zahnrad 7 angeordnet. Das Getriebe 4 ähnelt in seiner Ausführung einem Planetengetriebe mit Standübersetzung, wobei das zweite Zahnrad 7 einem Sonnenrad ähnelt und das dritte Zahnrad 8, das vierte Zahnrad sowie das fünfte Zahnrad translatorisch unbeweglichen Planetenrädern ähneln, welche von dem ersten Zahnrad 6 als Hohlrad umgeben sind.

Das vierte Zahnrad ist auf einem bolzenförmig auskragenden zweiten Abschnitt der Tragestruktur 2 gelagert, das fünfte Zahnrad auf einem bolzenförmig auskragenden dritten Abschnitt der Tragestruktur. Der zweite Abschnitt und der dritte Abschnitt sind in Fig. 1 nicht sichtbar.

Das zweite Zahnrad 7 und das dritte Zahnrad 8 sind in einem von der ringförmigen Radkomponente, nämlich dem Radringkörper 9, begrenzten Hohlraum 16 des ersten Rads 1 angeordnet und mit dem ersten Zahnrad 6 gekoppelt. Das dritte Zahnrad 8, das vierte Zahnrad und das fünfte Zahnrad sind mit dem ersten Zahnrad 6 und mit dem zweiten Zahnrad 7 verzahnt.

Die Tragestruktur 2 ist über den Hohlraum 16 mit dem Motor 3 verbunden. Hierzu sind der erste Abschnitt 15, der zweite Abschnitt und der dritte Abschnitt der Tragestruktur 2 genutzt, welche, bolzenförmig auskragend, durch den Hohlraum 16 hindurchgeführt und fest mit dem Motor 3 verbunden sind.

Das erste Rad 1 ist über ein zweites Wälzlager 13 und ein drittes Wälzlager 14 mit der Tragestruktur 2 verbunden. Das zweite Wälzlager 13 und das dritte Wälzlager 14 fungieren also als Radlager.

Das zweite Wälzlager 13 ist unmittelbar auf der Tragestruktur 2 abgestützt, welche in den Hohlraum 16 hineinragt.

Das dritte Wälzlager 14 ist über eine ringförmige Aufnahme 17 mit der Tragestruktur 2 verbunden. Die Aufnahme 17 ist über den ersten Abschnitt 15, den zweiten Abschnitt und den dritten Abschnitt der Tragestruktur 2 sowie über mit der Tragestruktur 2 fest verbundene, in Fig. 1 nicht gezeigte Streben, welche in jenen Bereichen, welche frei von dem dritten Zahnrad 8, dem vierten Zahnrad und dem fünften Zahnrad sind, durch den Hohlraum 16 hindurchgeführt sind und welche breiter bzw. flächiger als der erste Abschnitt 15, der zweite Abschnitt und der dritte Abschnitt sind, um die Aufnahme 17 stabil zu lagern, mit der Tragestruktur 2 verbunden.

Die durch den Hohlraum 16 hindurchgeführten Streben sind fest mit dem Motor 3 verbunden.

Mit der Motorwelle 5 ist eine Bremsscheibe 18 verbunden. Der Motor 3 und die Bremsscheibe 18 sind außerhalb eines von dem ersten Rad 1 und dem zweiten Rad eingegrenzten Bereichs des Fahrwerks angeordnet, wobei der Motor 3 dem ersten Rad 1 und der Bremsscheibe 18 zwischengeordnet ist.

Gegen die Bremsscheibe 18 können zur Bremsung des Schienenfahrzeugs ein erster Bremsbelag 19 und ein zweiter Bremsbelag 20 gedrückt werden, welche mit einer auf dem Fahrwerk gelagerten, nicht dargestellten Bremszange verbunden sind.

In Fig. 2 ist ein schematischer Seitenriss eines Ausschnitts aus einer beispielhaften zweiten Ausführungsvariante eines erfindungsgemäßen Fahrwerks eines Schienenfahrzeugs in geschnittener Darstellung offenbart.

Diese beispielhafte zweite Ausführungsvariante ähnelt jener beispielhaften ersten Ausführungsvariante eines erfindungsgemäßen Fahrwerks, welche in Fig. 1 gezeigt ist. Es werden daher in Fig. 2 teilweise gleiche Bezugszeichen wie in Fig. 1 verwendet.

Im Unterschied zu Fig. 1 ist in Fig. 2 ein Fahrwerk dargestellt, bei welchem ein federnd gelagerter Motor 3 über eine Kupplung 21 und ein mit einem ersten Rad 1, über welches das Fahrwerk auf einer Schiene eines in Fig. 2 nicht gezeigten Gleises abgestützt ist, verschränkten Getriebe 4 zur Drehmomentübertragung mit dem ersten Rad 1 gekoppelt ist. Eine mit dem Motor 3 gekoppelt Motorwelle 5 ist durch die Kupplung 21 geteilt.

Das Getriebe 4 weist ein erstes Zahnrad 6, ein zweites Zahnrad 7 und ein drittes Zahnrad 8 auf, welche in einem von einem Radkranz 11 des ersten Rads 1, d.h. von einer ringförmigen Radkomponente des ersten Rads 1, begrenzten Hohlraum 16 des ersten Rads 1 angeordnet sind.

Das erste Zahnrad 6 ist als Hohlrad ausgebildet und als Getriebekomponente in das erste Rad 1 bzw. in den Radkranz 11 eingepresst, d.h. fest mit diesem verbunden.

Das zweite Zahnrad 7 und das dritte Zahnrad 8 sind konstruktiv wie im Zusammenhang mit Fig. 1 beschrieben ausgeführt. Das dritte Zahnrad 8 ist mit dem ersten Zahnrad 6 und mit dem zweiten Zahnrad 7 verzahnt. Das zweite Zahnrad 7 ist zur Drehmomentübertragung mit jenem dem Motor 3 abgewandten, auf die Kupplung 21 folgenden Motorwellenabschnitt der Motorwelle 5 fest verbunden. Die Motorwelle 5 ist durch das zweite Zahnrad 7 hindurchgeführt und über ein als Wälzlager ausgeführtes Getriebelager 22 in einer Tragestruktur 2 des Fahrwerks gelagert. Das Getriebelager 22 ist somit zwischen dem Getriebe 4 und der Tragestruktur 2 angeordnet.

Das dritte Zahnrad 8 ist mittels eines ersten Wälzlagers 12 drehbar und im Wesentlichen unverschieblich auf einem Zahnradträger 23 gelagert.

Das Getriebe 4 ähnelt einem Planetengetriebe mit Standübersetzung, wobei dem ersten Zahnrad 6 und dem zweiten Zahnrad 7 neben dem dritten Zahnrad 8 auch ein viertes Zahnrad und ein fünftes Zahnrad, die konstruktiv und verbindungstechnisch gleich wie das dritte Zahnrad 8 ausgeführt sind, zwischengeordnet sind. Das vierte Zahnrad und das fünfte Zahnrad, welche in Fig. 2 nicht dargestellt sind, sind mit dem ersten Zahnrad 6 und dem zweiten Zahnrad 7 verzahnt.

Der Zahnradträger 23 ist durch den Hohlraum 16 hindurchgeführt und fest mit der Tragestruktur 2 verbunden. Der Zahnradträger 23 ist weiterhin über eine Feder 24, welche als Stahl-Schraubenfeder ausgebildet ist, mit dem Motor 3 verbunden. Dadurch ist der Motor 3 federnd mit der Tragestruktur 2 verbunden.

Das erste Rad 1 ist mittels eines zweiten Wälzlagers 13 auf der Tragestruktur 2 gelagert, mittels eines dritten Wälzlagers 14 über eine ringförmige Aufnahme 17 auf dem Zahnradträger 23 sowie auf in Fig. 2 nicht gezeigten Streben, welche durch den Hohlraum 16 hindurchgeführt, fest mit der Tragestruktur 2 gekoppelt und federnd mit dem Motor 3 verbunden sind. Bei einer Montage des Fahrwerks werden das dritte Wälzlager 14 und die Aufnahme 17 erst dann mit dem ersten Rad 1 verbunden, wenn das erste Zahnrad 6 in den Radkranz 11 eingepresst ist.

### Liste der Bezeichnungen

- 1: Erstes Rad
- 2: Tragestruktur
- 3: Motor
- 4: Getriebe
- 5: Motorwelle
- 6: Erstes Zahnrad
- 7: Zweites Zahnrad
- 8: Drittes Zahnrad
- 9: Radringkörper
- 10: Elastikelement
- 11: Radkranz
- 12: Erstes Wälzlager
- 13: Zweites Wälzlager
- 14: Drittes Wälzlager
- 15: Erster Abschnitt
- 16: Hohlraum
- 17: Aufnahme
- 18: Bremsscheibe
- 19: Erster Bremsbelag
- 20: Zweiter Bremsbelag
- 21: Kupplung
- 22: Getriebelager
- 23: Zahnradträger
- 24: Feder

## Patentansprüche

1. Fahrwerk für ein Schienenfahrzeug mit einer Tragestruktur (2), mit welcher zumindest ein erstes Rad (1) zur Abstützung des Fahrwerks auf einer ersten Schiene und ein zweites Rad zur Abstützung des Fahrwerks auf einer zweiten Schiene drehbar verbunden sind, sowie mit zumindest einem Motor (3) und zumindest einem Getriebe (4), welche mit der Tragestruktur (2) verbunden sind und zur Drehmomentübertragung zumindest mit dem ersten Rad (1) gekoppelt sind, **dadurch gekennzeichnet, dass** das zumindest erste Rad (1) selbst oder eine mit dem zumindest ersten Rad (1) fest verbundene Getriebekomponente als erstes Zahnrad (6) des zumindest einen Getriebes (4) ausgebildet ist, wobei zumindest ein zweites Zahnrad (7) des zumindest einen Getriebes (4) zumindest teilweise in einem von einer ringförmigen Radkomponente des zumindest ersten Rads (1) begrenzten Hohlraum (16) des zumindest ersten Rads (1) angeordnet ist und mit dem ersten Zahnrad (6) gekoppelt ist, und wobei die Tragestruktur (2) über den von der ringförmigen Radkomponente begrenzten Hohlraum (16) fest oder federnd mit dem zumindest einen Motor (3) verbunden ist.

2. Fahrwerk nach Anspruch 1, **dadurch gekennzeichnet, dass** das erste Zahnrad (6) als Hohlrad ausgebildet ist.

3. Fahrwerk nach Anspruch 1 oder 2, **dadurch gekennzeichnet, dass** das zweite Zahnrad (7) mit dem zumindest einen Motor (3) zur Drehmomentübertragung verbunden ist.

4. Fahrwerk nach einem der Ansprüche 1 bis 3, **dadurch gekennzeichnet, dass** ein drittes Zahnrad (8) des zumindest einen Getriebes (4) dem ersten Zahnrad (6) und dem zweiten Zahnrad (7) zwischengeordnet ist.

5. Fahrwerk nach Anspruch 4, **dadurch gekennzeichnet, dass** das dritte Zahnrad (8) drehbar und relativ zu der Tragestruktur (2) im Wesentlichen unverschieblich auf der Tragestruktur (2) oder auf einem fest mit der Tragestruktur (2) verbundenen Zahnradträger (23) gelagert ist.

6. Fahrwerk nach Anspruch 4 oder 5, **dadurch gekennzeichnet, dass** das dritte Zahnrad (8) mit dem ersten Zahnrad (6) und mit dem zweiten Zahnrad (7) verzahnt ist.

7. Fahrwerk nach einem der Ansprüche 1 bis 6, **dadurch gekennzeichnet, dass** der zumindest eine Motor (3) federnd mit der Tragestruktur (2) verbunden ist, wobei zwischen dem zumindest einen Motor (3) und dem zumindest einen Getriebe (4) eine Kupplung (21) angerordnet ist und zwischen dem zumindest einen Getriebe (4) und der Tragestruktur (2) ein Getriebelager (22) angeordnet ist.

8. Fahrwerk nach einem der Ansprüche 1 bis 7, **dadurch gekennzeichnet, dass** die Tragestruktur (2) als Achsportal eines Losradsatzes ausgebildet ist.

9. Fahrwerk nach einem der Ansprüche 1 bis 7, **dadurch gekennzeichnet, dass** die Tragestruktur (2) als Fahrwerksrahmen ausgebildet ist.

10. Fahrwerk nach einem der Ansprüche 1 bis 9, **dadurch gekennzeichnet, dass** mit einer Motorwelle (5) des zumindest einen Motors (3) eine Bremsscheibe (18) verbunden ist.

11. Schienenfahrzeug mit zumindest einem Fahrwerk nach einem der Ansprüche 1 bis 10.

## Claims

1. Running gear for a rail vehicle with a carrier structure (2), to which at least a first wheel (1) for supporting the running gear on a first rail and a second wheel for supporting the running gear on a second rail are connected in a rotatable manner, as well as with at least one motor (3) and at least one gear unit (4), which are connected to the carrier structure (2) and are coupled at least to the first wheel (1) for torque transfer, **characterised in that** the at least first wheel (1) itself or a gear unit component connected to the at least first wheel (1) in a fixed manner is embodied as a first gear (6) of the at least one gear unit (4), wherein at least a second gear (7) of the at least one gear unit (4) is arranged at least partially in a cavity (16) of the at least first wheel (1) that is delimited by an annular wheel component of the at least one wheel (1) and is coupled to the first gear (6), and wherein the carrier structure (2) is connected to the at least one motor (3) in a fixed or sprung manner via the cavity (16) delimited by the annular wheel component.

2. Running gear according to claim 1, **characterised in that** the first gear (6) is embodied as a ring gear.

3. Running gear according to claim 1 or 2, **characterised in that** the second gear (7) is connected to the at least one motor (3) for torque transfer.

4. Running gear according to one of claims 1 to 3, **characterised in that** a third gear (8) of the at least one gear unit (4) is arranged between the first gear (6) and the second gear (7).

5. Running gear according to claim 4, **characterised in that** the third gear (8) is mounted on the carrier structure (2), or on a gear carrier (23) connected to the carrier structure (2) in a fixed manner, in a rotatable manner that substantially cannot be displaced relative to the carrier structure (2).

6. Running gear according to claim 4 or 5, **characterised in that** the third gear (8) is intermeshed with the first gear (6) and with the second gear (7).

7. Running gear according to one of claims 1 to 6, **characterised in that** the at least one motor (3) is connected to the carrier structure (2) in a sprung manner, wherein a coupling (21) is arranged between the at least one motor (3) and the at least one gear unit (4) and a gear unit mounting (22) is arranged between the at least one gear unit (4) and the carrier structure (2).

8. Running gear according to one of claims 1 to 7, **characterised in that** the carrier structure (2) is embodied as an axis gantry of an idler set.

9. Running gear according to one of claims 1 to 7, **characterised in that** the carrier structure (2) is embodied as a running gear frame.

10. Running gear according to one of claims 1 to 9, **characterised in that** a brake disc (18) is connected to a motor shaft (5) of the at least one motor (3).

11. Rail vehicle with at least one running gear according to one of claims 1 to 10.

## Revendications

1. Bogie pour un véhicule ferroviaire avec une structure porteuse (2), à laquelle sont attachées de façon pivotante au moins une première roue (1) pour soutenir le bogie sur un premier rail et une seconde roue pour soutenir le bogie sur un second rail, ainsi qu'au moins un moteur (3) et au moins un engrenage (4) liés à la structure porteuse (2) et couplés au moins à la première roue (1) pour transmettre le couple, **caractérisé en ce que** l'au moins une première roue (1) elle-même ou un composant engrenage solidement lié à l'au moins une première roue (1) est constitué d'un premier pignon (6) de l'au moins un engrenage (4), où au moins un deuxième pignon (7) de l'au moins un engrenage (4) est disposé au moins en partie dans une cavité (16) de l'au moins une première roue (1) délimitée par un composant de roue annulaire de l'au moins une première roue (1) et est couplé au premier pignon (6), et dans lequel la structure porteuse (2) est liée solidement ou élastiquement à l'au moins un moteur (3) via la cavité (16) délimitée par le composant de roue annulaire.

2. Bogie selon la revendication 1, **caractérisé en ce que** le premier pignon (6) est conçu comme une roue creuse.

3. Bogie selon la revendication 1 ou 2, **caractérisé en ce que** le deuxième pignon (7) est lié à l'au moins un moteur (3) pour transmettre le couple.

4. Bogie selon l'une des revendications 1 à 3, **caractérisé en ce qu'**un troisième pignon (8) de l'au moins un engrenage (4) est intercalé entre le premier pignon (6) et le deuxième pignon (7).

5. Bogie selon la revendication 4, **caractérisé en ce que** le troisième pignon (8) est disposé sur la structure porteuse (2) de façon pivotante et pratiquement impossible à déplacer par rapport à la structure porteuse (2) ou sur un support d'engrenage (23) solidement lié à la structure porteuse (2).

6. Bogie selon la revendication 4 ou 5, **caractérisé en ce que** le troisième pignon (8) est engrené avec le premier pignon (6) et le deuxième pignon (7).

7. Bogie selon l'une des revendications 1 à 6, **caractérisé en ce que** l'au moins un moteur (3) est lié de façon élastique à la structure porteuse (2), dans lequel un couplage (21) est disposé entre l'au moins un moteur (3) et l'au moins un engrenage (4) et un palier d'arbre (22) est disposé entre l'au moins un engrenage (4) et la structure porteuse (2).

8. Bogie selon l'une des revendications 1 à 7, **caractérisé en ce que** la structure porteuse (2) est conçue comme un portique d'un jeu de roues libres.

9. Bogie selon l'une des revendications 1 à 7, **caractérisé en ce que** la structure porteuse (2) est conçue comme un cadre de bogie.

10. Bogie selon l'une des revendications 1 à 9, **caractérisé en ce qu'**un disque de frein (18) est lié à un arbre moteur (5) de l'au moins un moteur (3).

11. Véhicule ferroviaire avec au moins un bogie selon l'une des revendications 1 à 10.
